# EUROPÄISCHE PATENTSCHRIFT

(11) **EP 3 486 545 B1**
(45) Veröffentlichungstag und Bekanntmachung des Hinweises auf die Patenterteilung: **07.10.2020**
(21) Anmeldenummer: 18206504.5
(22) Anmeldetag: 15.11.2018
(51) Int. Cl.: F16P 3/14, G01V 8/20

(54) **SICHERHEITSSTEUERUNG UND SICHERHEITSSYSTEM**
SAFETY CONTROLLER AND SAFETY SYSTEM
COMMANDE DE SÉCURITÉ ET SYSTÈME DE SÉCURITÉ

(30) Priorität: 21.11.2017 DE 102017127486
(43) Veröffentlichungstag der Anmeldung: 22.05.2019
(73) Patentinhaber: SICK AG, 79183 Waldkirch (DE)
(72) Erfinder: KNAB, Danilo, 79312 Emmendingen (DE); AMS, Mathias, 79211 Denzlingen (DE); MÜNICH, Dennis, 79102 Freiburg (DE)
(74) Vertreter: Manitz Finsterwald Patent- und Rechtsanwaltspartnerschaft mbB

(56) Entgegenhaltungen:
- EP-A1- 1 494 048
- EP-A1- 2 975 434
- EP-A1- 3 133 423
- EP-A2- 1 331 433
- EP-A2- 1 331 434
- EP-A2- 2 306 063
- JP-A- 2001 071 192

## Beschreibung

Die vorliegende Erfindung betrifft eine Sicherheitssteuerung zur sicherheitsgerichteten Überwachung und Steuerung einer Maschine, mit zumindest einem Überwachungseingang, welcher dazu eingerichtet ist, ein Detektionssignal von einer Schutzeinrichtung zu empfangen, zumindest einem Steuerausgang, welcher dazu eingerichtet ist, einen Abschaltbefehl an die zu überwachende und zu steuernde Maschine auszugeben, zumindest einem Überbrückungseingang, welcher dazu eingerichtet ist, eine Überbrückungsanforderung von einem unabhängigen Steuersystem zu empfangen, und einer Auswerteeinheit, welche mit dem Überwachungseingang, dem Überbrückungseingang und dem Steuerausgang verbunden ist, und welche dazu eingerichtet ist, auf der Grundlage eines empfangenen Detektionssignals den Abschaltbefehl zu erzeugen, wobei die Sicherheitssteuerung nach dem Empfangen einer Überbrückungsanforderung für einen vorgebbaren, in einen oder mehrere Teilzeiträume unterteilten Überbrückungszeitraum in einem Überbrückungsmodus betrieben wird, wobei in dem Überbrückungsmodus zumindest während eines Teilzeitraums auch bei einem Empfang eines Detektionssignals kein Abschaltbefehl ausgegeben wird.

Aus Sicherheitsgründen werden Zugänge zu Gefährdungsbereichen von Maschinen mit Schutzeinrichtungen, insbesondere berührungslos wirkenden Schutzeinrichtungen, abgesichert, welche bei einem unbeabsichtigten oder unzulässigen Eindringen von Personen in diesen Gefährdungsbereich geeignete Schutzmaßnahmen veranlassen. Als Schutzeinrichtungen werden beispielsweise optoelektronische Sensoren wie Lichtschranken, Lichtvorhänge, Lichttaster, Laserscanner oder dergleichen oder auch Ultraschallsensoren eingesetzt. Bei einer Verletzung eines Schutzfeldes der Schutzeinrichtung wird ein Objekterfassungs- oder Detektionssignal erzeugt. Wenn ein solches Detektionssignal empfangen wird, wird ein entsprechender Abschaltbefehl erzeugt, der in der Regel zu einem sofortigen Abschalten der Maschine führt oder die Maschine zumindest in einen Zustand versetzt, in dem eine Gefährdung von Personen ausgeschlossen ist. Allerdings ist es für einen ordnungsgemäßen Betrieb der Maschine erforderlich, dass zu bearbeitende Werkstücke ungehindert der Maschine zugeführt und auch von dieser wieder abgeführt werden können, ohne dass eine dabei zwangsläufig auftretende Verletzung eines Schutzfeldes den Betrieb der Maschine unterbricht.

Zu diesem Zweck wird eine gattungsgemäße Sicherheitssteuerung eingesetzt, die sowohl mit der Schutzeinrichtung als auch mit der zu überwachenden Maschine verbunden ist und zumindest einen auch als Mutingeingang bezeichneten Überbrückungseingang aufweist. Über diesen Überbrückungseingang kann der Sicherheitssteuerung signalisiert werden, dass ein Werkstück das Schutzfeld der Schutzeinrichtung passieren muss. Bei dem signalisierenden unabhängigen Steuersystem kann es sich insbesondere um ein Steuersystem handeln, welches auch für eine Prozesssteuerung der zu überwachenden Maschine und insbesondere auch zur Steuerung einer mit der Maschine gekoppelten Fördereinrichtung vorgesehen ist. Wenn die Sicherheitssteuerung eine derartige Muting- oder Überbrückungsanforderung empfängt, geht die Sicherheitssteuerung in den Überbrückungsmodus über, welcher auch als Mutingbetrieb bezeichnet wird. Das zwangsläufig beim Eintreten des Werkstücks in das Schutzfeld auftretende Detektionssignal wird in diesem Überbrückungsmodus in einer Weise ignoriert, dass zumindest kein Abschaltbefehl an die zu überwachende und zu steuernde Maschine ausgegeben wird.

Für einen sicheren und zugleich zuverlässigen Betrieb der Maschine ist es erforderlich, dass die Zeitdauer, für welche die Sicherheitssteuerung in dem Überbrückungsmodus betrieben wird, an die Zeitdauer angepasst wird, welche ein Werkstück zum Passieren der Schutzeinrichtung benötigt. Wenn der Überbrückungsmodus länger als erforderlich aktiv ist, besteht die Gefahr, dass vor oder hinter einem Werkstück Personen unerkannt in die Maschine eindringen können. Andererseits führt eine zu kurze Betriebsdauer im Überbrückungsmodus dazu, dass ein an sich zulässiges Werkstück als vermeintlich unerlaubtes Objekt erkannt wird und entsprechend fälschlicherweise ein Abschaltbefehl ausgegeben wird, der zu einem unnötigen Stillstand der Maschine führt.

Eine gattungsgemäße Sicherheitssteuerung ist beispielsweise in EP 3 133 423 A1 offenbart. Dort ist ein Steuerungssystem für einen Lichtvorhang beschrieben, welches zunächst in einem vollständigen Muting-Modus, in dem für alle Strahlen Muting aktiviert ist, und kurz nach Eintritt eines Objekts in den Lichtvorhang in einem teilweisen Muting-Modus betreibbar ist, in dem Muting nur für diejenigen unteren Strahlen aktiviert bleibt, welche tatsächlich durch das Objekt unterbrochen werden (als "muting height" bezeichnet). Für die höher gelegenen Strahlen wird das Muting wieder deaktiviert, d.h. diese Strahlen überwachen im teilweisen Muting-Modus weiterhin das Schutzfeld. Gemäß einem Aspekt soll der höchste von dem Objekt unterbrochene Lichtstrahl ferner auf der Grundlage des Ablaufs einer vorbestimmten Zeitdauer identifiziert werden, nachdem das Objekt zumindest einen der Lichtstrahlen während des vollständigen Muting-Modus unterbrochen hat. Diese Zeitdauer kann als Funktion einer Fördergeschwindigkeit bestimmt werden.

Eine weitere Sicherheitssteuerung ist in EP 2 306 063 B1 beschrieben. Bei dieser Sicherheitssteuerung wird nach dem Empfang einer Überbrückungsanforderung zunächst überprüft, ob innerhalb eines vorgegebenen Zeitintervalls von der Schutzeinrichtung ein Detektionssignal generiert wird, wobei dieses Zeitintervall maximal 4 s beträgt. Wenn diese Bedingung erfüllt ist, so wird für eine bestimmte Zeitdauer die Schutzeinrichtung überbrückt, d.h. die Sicherheitssteuerung in einem Überbrückungsmodus betrieben, so dass eine Objektdetektion durch die Schutzeinrichtung nicht mehr zu einem Abschaltbefehl für die Maschine führt und dadurch ein Werkstück die Schutzeinrichtung passieren kann. Die Sicherheitssteuerung und die Schutzeinrichtung sind in einem sogenannten Sicherheitssensor integriert, wodurch es schwierig sein kann, Diagnoseinformationen bei einer etwaigen Fehlfunktion zu erhalten. Zudem sind die zeitlichen Zusammenhänge bei der Schutzfeldüberwachung fest parametriert, so dass die Flexibilität und die Sicherheit eingeschränkt sind.

Es ist die Aufgabe der vorliegenden Erfindung, eine Sicherheitssteuerung anzugeben, bei welcher die Flexibilität und Sicherheit erhöht ist.

Die Lösung der Aufgabe erfolgt durch eine Sicherheitssteuerung mit den Merkmalen des Anspruchs 1. Vorteilhafte Ausgestaltungen der Erfindung sind Gegenstand von Unteransprüchen.

Erfindungsgemäß ist zumindest ein mit der Auswerteeinheit verbundener Konfigurationseingang vorgesehen, welcher dazu eingerichtet ist, ein jeweiliges Konfigurationssignal zu empfangen, wobei die Auswerteeinheit dazu eingerichtet ist, den Überbrückungszeitraum und/oder zumindest einen Teilzeitraum des Überbrückungszeitraums auf der Grundlage des empfangenen Konfigurationssignals zu bestimmen.

Mit Hilfe des oder der Konfigurationseingänge ist es also möglich, auf einfache Weise das Timing der Sicherheitssteuerung zu parametrieren. Dadurch können der Überbrückungszeitraum bzw. ein oder mehrere Teilzeiträume an die Länge von zulässigen Objekten oder Werkstücken, die die Schutzeinrichtung ungehindert passieren sollen, und/oder an deren Transportgeschwindigkeit angepasst werden. Die Konfigurationssignale können statisch oder auch dynamisch übermittelt werden, was nachfolgend noch näher erläutert wird.

Die Sicherheitssteuerung kann insbesondere als eine separate Baueinheit ausgestaltet sein, die modular in Verbindung mit Schutzvorrichtungen und Maschinen unterschiedlicher Bauart eingesetzt werden kann.

Bei dem genannten Überbrückungszeitraum bzw. den Teilzeiträumen handelt es sich um jeweilige Zeitintervalle, wobei das Bestimmen dieser Zeiträume im Sinne der vorliegenden Erfindung umfasst, dass beispielsweise Anfangszeitpunkte, Zeitdauern und/oder Endzeitpunkte für diese Zeiträume vorgegeben werden, wobei die Teilzeiträume nicht zwingend innerhalb des Überwachungszeitraums fest vorgegeben sein müssen, sondern deren Beginn und/oder Ende durch jeweilige Signale, beispielsweise Detektionssignale oder Überbrückungsanforderungen, getriggert werden können. Die genannten Teilzeiträume müssen nicht zwingend zeitlich nacheinander liegen, sondern können sich auch zeitlich überlappen, was nachfolgend noch näher erläutert wird.

Vorteilhafterweise können zumindest zwei redundante, insbesondere zueinander komplementäre Überbrückungseingänge vorgesehen sein, die insbesondere zueinander synchrone Überbrückungsanforderungen empfangen müssen, um den Überbrückungsmodus zu aktivieren und/oder zu deaktivieren. Dadurch wird die Gefahr einer sicherheitsrelevanten Fehlfunktion der Sicherheitssteuerung, die beispielsweise auf Leitungsschäden zurückzuführen ist, deutlich vermindert.

Vorteilhafterweise kann die Sicherheitssteuerung mehrere Überwachungseingänge aufweisen, denen jeweils ein oder mehrere Überbrückungseingänge zugeordnet sind. Auf diese Weise lassen sich mehrere Ein- oder Ausfuhrstellen der Maschine mit nur einer Sicherheitssteuerung überwachen, die mit jeweiligen, mit einem der Überwachungseingänge verbundenen Schutzeinrichtungen verbunden ist.

Der Begriff "Abschaltbefehl" umfasst für die Zwecke dieses Textes auch einen Befehl zum Übergang in einen sicheren Verriegelungszustand, in dem kein gefährdender Betrieb mehr stattfindet (also der gefährdende Betrieb abgeschaltet ist), ohne dass die Maschine vollständig ausgeschaltet wird.

Erfindungsgemäß ist die Auswerteeinheit dazu eingerichtet, einen Störungszustand festzustellen, wenn innerhalb des Überbrückungszeitraums und/oder innerhalb zumindest eines Teilzeitraums ein erwartetes Detektionssignal nicht empfangen wurde und/oder eine erwartete Beendigung eines Empfangs eines Detektionssignals oder einer Überbrückungsanforderung nicht erfolgt ist. Ein solcher Störungszustand kann beispielsweise dann festgestellt werden, wenn ein Objekt, das durch den Empfang einer entsprechenden Überbrückungsanforderung von der Sicherheitssteuerung zu einem bestimmten Zeitpunkt erwartet wurde, nicht oder verspätet die Schutzeinrichtung passiert. Auch ein Zustand, in dem ein Objekt nach Beendigung der Überbrückungsanforderung das Schutzfeld noch nicht verlassen hat und daher noch ein entsprechendes Detektionssignal empfangen wird, kann als Störungszustand registriert werden. Das Feststellen eines Störungszustandes umfasst somit nicht nur eventuelle Defekte bei Komponenten der Sicherheitssteuerung oder damit verbundener Komponenten, sondern allgemein eine Abweichung vom Regelbetrieb, die unter Umständen auch sicherheitskritisch sein könnte. Das Feststellen eines Störungszustands umfasst insbesondere auch ein Speichern einer entsprechenden Fehlermeldung, beispielsweise in Form eines Flags oder eines Fehlercodes, welcher insbesondere auch Aufschluss über die Art des Störungszustandes geben kann.

Vorteilhafterweise kann dieser Störungszustand an einem Störungsausgang signalisiert werden, beispielsweise in Form einer Signallampe oder einer sonstigen Anzeigevorrichtung, welche vorteilhafterweise auch Auskunft über die Art des Störungszustands geben kann.

Bei einer vorteilhaften Ausführungsform wird nach Feststellen eines Störungszustands ein Abschaltbefehl erst dann ausgegeben, wenn ein Detektionssignal empfangen wurde. Im Unterschied zu einer herkömmlichen Sicherheitssteuerung, insbesondere zu der in EP 2 306 063 B1 beschriebenen Sicherheitssteuerung, bei welcher ein Nichteintreffen oder ein verspätetes Eintreffen eines erwarteten Objekts zu einer sofortigen Ausgabe des Abschaltbefehls führt, wird bei dieser vorteilhaften Ausgestaltung die Maschine erst dann abgeschaltet, wenn tatsächlich ein Objekt das Schutzfeld passiert. Dies erweist sich insbesondere bei Wartungs- und Einrichtungsarbeiten des Gesamtsystems aus Sicherheitssteuerung, Schutzeinrichtung und zu überwachender Maschine als vorteilhaft. Wenn beispielsweise eine von dem unabhängigen Steuersystem ausgesendete Überbrückungsanforderung empfangen wird, obwohl kein Objekt die Schutzeinrichtung passieren soll, wird die Maschine trotzdem nicht angehalten, solange nicht ein Objekt oder eine Bedienperson versucht, durch das Schutzfeld in den zu überwachenden Gefahrenbereich zu gelangen. Da der Abschaltbefehl in jedem Fall ausgegeben wird, wenn sich die Sicherheitssteuerung in dem Störungszustand befindet und ein Detektionssignal empfangen wurde, ist die Sicherheit in keiner Weise beeinträchtigt. Der Störungszustand kann beispielsweise durch einen manuellen Reset wieder aufgehoben werden, wobei das Aufheben unabhängig davon erfolgen kann, ob während des Störungszustands ein zu einem Abschaltbefehl führendes Detektionssignal empfangen wurde oder nicht.

Gemäß einer ersten erfindungsgemäßen Ausführungsform ist vorgesehen, dass einer der Teilzeiträume ein vorgebbarer erster Latenzzeitraum ist, innerhalb dessen ein Detektionssignal empfangen werden muss, damit kein Störungszustand festgestellt wird, wobei die Auswerteeinheit dazu eingerichtet ist, den ersten Latenzzeitraum auf der Grundlage des empfangenen Konfigurationssignals zu bestimmen. Der erste Latenzzeitraum definiert insbesondere den Zeitraum, der nach dem Empfang einer Überbrückungsanforderung maximal vergehen darf, bis ein Objekt das Schutzfeld erstmals unterbricht und somit das Detektionssignal auslöst. Durch die Möglichkeit, diesen Latenzzeitraum auf der Grundlage des Konfigurationssignals anzupassen, ist es beispielsweise möglich, ein Förderband, welches Objekte an die Maschine heranführt bzw. Objekte durch die Maschine hindurch transportiert, mit unterschiedlichen Fördergeschwindigkeiten zu betreiben. Wenn etwa ein Objekt langsamer als üblich transportiert wird, kann die Latenzzeit entsprechend verlängert werden, so dass es bei einem resultierenden späteren Eintreffen des Objekts im Schutzfeld nicht zu einem Feststellen eines Störungszustands kommt.

Gemäß einer zweiten erfindungsgemäßen Ausführungsform ist einer der Teilzeiträume ein vorgebbarer Detektionszeitraum, über den ein zuvor empfangenes Detektionssignal andauern muss, damit kein Störungszustand festgestellt wird, wobei die Auswerteeinheit dazu eingerichtet ist, den Detektionszeitraum auf der Grundlage des empfangenen Konfigurationssignals zu bestimmen. Bei dem zuvor empfangenen Detektionssignal handelt es sich insbesondere um das während des ersten Latenzzeitraums empfangene Detektionssignal. Beispielsweise kann der Detektionszeitraum an die Länge und/oder die Transportgeschwindigkeit eines zu transportierenden Objekts angepasst werden.

Insbesondere ist die Auswerteeinheit dazu eingerichtet, einen Mindestwert und/oder einen Höchstwert für die Dauer des Detektionszeitraums auf der Grundlage des empfangenen Konfigurationssignals zu bestimmen. Dadurch wird letztlich sichergestellt, dass die Sicherheitssteuerung nur solange im Überbrückungsmodus betrieben wird, wie es aufgrund der Länge und der Transportgeschwindigkeit des Objekts erforderlich ist. Der Mindestwert und/oder der Höchstwert können insbesondere dynamisch angepasst werden.

Gemäß einer vorteilhaften Ausführungsform ist vorgesehen, dass einer der Teilzeiträume ein vorgebbarer zweiter Latenzzeitraum ist, wobei der Betrieb in dem Überbrückungsmodus beendet wird, wenn für die Dauer des zweiten Latenzzeitraums kein Detektionssignal empfangen wird und/oder wenn nach Beendigung des Empfangs der Überbrückungsanforderung innerhalb des zweiten Latenzzeitraums auch der Empfang des Detektionssignals beendet wird, wobei die Auswerteeinheit dazu eingerichtet ist, den zweiten Latenzzeitraum auf der Grundlage des empfangenen Konfigurationssignals zu bestimmen.

Der Beginn des zweiten Latenzzeitraums wird also insbesondere durch einen Entfall des Detektionssignals oder der Überbrückungsanforderung getriggert. Eine vorübergehende Unterbrechung des Detektionssignals, die kürzer als die zweite Latenzzeit ist, führt nicht zu einer Beendigung des Überbrückungsmodusbetriebs. Der zweite Latenzzeitraum wird hierbei also vorzeitig beendet und kann wieder durch ein entsprechendes Ereignis neu getriggert werden. Dadurch wird insbesondere gewährleistet, dass kurze Lücken im Transportgut, die zu einer entsprechenden kurzzeitigen Freigabe des Schutzfeldes führen, keine vorzeitige Beendigung des Überbrückungsmodus zur Folge haben und somit Fehlfunktionen und/oder ein fälschliches Feststellen eines Störungszustandes vermieden werden.

Erfindungsgemäß ist einer der Teilzeiträume ein vorgebbarer dritter Latenzzeitraum, innerhalb dessen nach Beendigung des Betriebs der Sicherheitssteuerung in dem Überbrückungsmodus der Empfang der Überbrückungsanforderung beendet sein muss, damit kein Störungszustand festgestellt wird, wobei die Auswerteeinheit dazu eingerichtet ist, den dritten Latenzzeitraum auf der Grundlage des empfangenen Konfigurationssignals zu bestimmen. Durch die Überwachung des dritten Latenzzeitraums wird sichergestellt, dass eine Überbrückungsanforderung nicht für eine übermäßig lange Zeit, d.h. für einen längeren Zeitraum, als es die Durchgangszeit eines Objekts durch das Schutzfeld erfordern würde, bestehen bleiben kann.

Gemäß einer vorteilhaften Ausführungsform der Erfindung ist der Konfigurationseingang dazu eingerichtet, das Konfigurationssignal von dem unabhängigen Steuersystem zu empfangen. Da es sich bei dem unabhängigen Steuersystem insbesondere um ein Steuersystem handeln kann, welches auch für eine Prozesssteuerung der zu überwachenden Maschine und insbesondere auch zur Steuerung einer mit der Maschine gekoppelten Fördereinrichtung vorgesehen ist, ist das unabhängige Steuersystem daher in der Regel über die Geschwindigkeit und/oder die Abmessungen von Objekten "informiert", für die eine Überbrückungsanforderung ausgegeben werden soll. So kann das unabhängige Steuersystem ein angepasstes Timing für die genannten Überbrückungs- und/oder Teilzeiträume, insbesondere die Latenzzeiträume, in der Sicherheitssteuerung konfigurieren, wobei dieses Konfigurieren auch dynamisch, d.h. z.B. individuell für jedes Objekt erfolgen kann.

Alternativ oder zusätzlich kann eine mit dem Konfigurationseingang verbundene Kodiervorrichtung vorgesehen sein, welche eingerichtet ist, das Konfigurationssignal zu erzeugen. Die Kodiervorrichtung kann zum Beispiel eine oder mehrere Schalter aufweisen. Eine Konfiguration mittels Kodiervorrichtung ist eher als statisch anzusehen.

Das oder die Konfigurationssignale können von dem unabhängigen Steuersystem und/oder der Kodiervorrichtung zum Beispiel als Zahlenwert übermittelt werden. Ferner können entsprechende Werte für die genannten Zeiträume auch in der Auswerteeinheit hinterlegt sein, etwa in Form einer Lookup-Tabelle, und entsprechend einem durch das unabhängige Steuersystem und/oder die Kodiervorrichtung übermittelten Logikwert aktiviert werden.

Nach einer weiteren vorteilhaften Ausführungsform sind mehrere Konfigurationseingänge vorgesehen, wobei die Konfigurationssignale als 1-aus-n-Code übermittelt werden. Eine solche 1-aus-n-Codierung wird als One-Hot-Codierung bezeichnet. Es handelt sich hierbei um eine binäre Kodierung eines Konfigurationssignals, wobei jeder Konfigurationseingang 0 oder 1 empfangen kann. Hiermit wird eine hohe Redundanz erreicht.

Die vorliegende Erfindung betrifft ferner ein Sicherheitssystem mit einer Sicherheitssteuerung nach einem der vorhergehenden Ansprüche und zumindest einer mit der Sicherheitssteuerung verbundenen Schutzeinrichtung. Die Sicherheitssteuerung und die Schutzeinrichtung sind vorteilhafterweise als separate Baueinheiten ausgeführt, können aber auch in einer integrierten Baueinheit angeordnet sein. Vorteilhafterweise ist die Schutzeinrichtung eine berührungslos wirkende Schutzeinrichtung, insbesondere ein optoelektronischer Sensor oder ein Ultraschallsensor. Beispielhafte optoelektronische Sensoren wurden eingangs genannt.

Weitere vorteilhafte Ausführungsformen der Erfindung ergeben sich aus den Unteransprüchen, der Beschreibung und der Zeichnung.

Die Erfindung wird nachfolgend anhand eines Ausführungsbeispiels mit Bezug auf die Zeichnung beschrieben. Es zeigen:
- Fig. 1: ein schematisches Blockschaltbild einer Sicherheitssteuerung gemäß einem Ausführungsbeispiel der vorliegenden Erfindung, welche mit einer Maschine und einer Schutzeinrichtung verbunden ist; und
- Fig. 2: ein Zeitdiagramm für Signale, welche von der Sicherheitssteuerung gemäß Fig. 1 empfangen und gesendet werden.

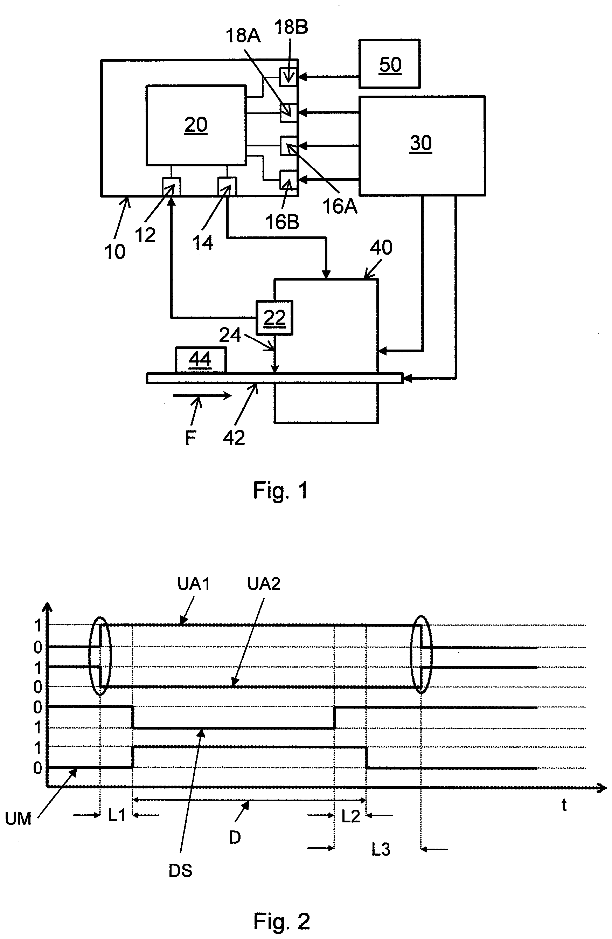

Fig. 1 zeigt schematisch eine Sicherheitssteuerung 10 zur sicherheitsgerichteten Überwachung und Steuerung einer Maschine 40 gemäß einem Ausführungsbeispiel. Die Sicherheitssteuerung 10 umfasst eine Auswerteeinheit 20, die mit einem Überwachungseingang 12, einem Steuerausgang 14, zwei Überbrückungseingängen 16A, 16B, und zwei Konfigurationseingängen 18A, 18B verbunden ist. Die Anzahl der genannten Ein- und Ausgänge ist hier lediglich beispielhaft, d.h. es können auch mehr oder - im Fall der Überbrückungseingänge 16A, 16B und der Konfigurationseingänge 18A, 18B - auch weniger Ein- bzw. Ausgänge vorgesehen sein.

Der Überwachungseingang 12 ist mit einer Schutzeinrichtung 22 verbunden, welche zur Überwachung eines Schutzfeldes 24 an der Maschine 40 angeordnet ist. Die Schutzeinrichtung 22 ist hier lediglich schematisch dargestellt. Sie kann beispielsweise als berührungslose Schutzeinrichtung, insbesondere als optoelektronischer Sensor ausgestaltet sein. Über ein Förderband 42 können Objekte 44 in einer Förderrichtung F in die Maschine 40 eingeführt werden. Wenn das Schutzfeld 24 der Schutzeinrichtung 22 durch ein Objekt 44 oder eine Person unterbrochen oder verletzt wird, wird ein Detektionssignal an die Sicherheitssteuerung 10 übermittelt.

Der Steuerausgang 14 ist mit der Maschine 40 verbunden, wobei ein über den Steuerausgang 14 übermittelter Abschaltbefehl die Maschine 40 stoppt oder zumindest in einen sicheren Verriegelungszustand überführt, in dem eine Gefährdung von in die Maschine 40 eindringenden Personen ausgeschlossen ist.

Die Maschine 40 ist ferner mit einem unabhängigen Steuersystem 30 verbunden, welches eine Prozesssteuerung der Maschine 40 vornimmt. Die Steuerung des Förderbandes 42 erfolgt ebenfalls über das Steuersystem 30.

Gemäß einer Abwandlung kann auch das Förderband 42 mit einem weiteren Steuerausgang der Sicherheitssteuerung 10 verbunden sein, so dass auch das Förderband 42 in die Überwachung und Steuerung durch die Sicherheitssteuerung 10 einbezogen ist.

Das Steuersystem 30 ist ferner auch mit den Überbrückungseingängen 16A, 16B und dem Konfigurationseingang 18A verbunden.

Wenn ein Objekt 44 in die Maschine 40 hineintransportiert werden soll und hierfür das Schutzfeld 24 passieren muss, sendet das Steuersystem 30 über die Überbrückungseingänge 16A, 16B eine entsprechende Überbrückungsanforderung an die Sicherheitssteuerung 10. Aufgrund dieser Überbrückungsanforderung wechselt die Sicherheitssteuerung 10 für einen vorgebbaren Überbrückungszeitraum in einen Überbrückungsmodus.

Die Auswerteeinheit 20 unterdrückt oder überbrückt zumindest während eines Teilzeitraums ein durch die Schutzeinrichtung 22 erzeugtes und durch das Objekt 44 ausgelöstes Detektionssignal, so dass für eine bestimmte Zeitdauer kein Abschaltbefehl an den Steuerausgang 14 ausgegeben wird, obwohl das Schutzfeld 24 unterbrochen ist. Dadurch kann das Objekt 44 ungehindert in die Maschine 40 hineintransportiert werden, ohne dass es zu einem Abschalten der Maschine 40 kommt.

Über den Konfigurationseingang 18A kann das Steuersystem 30 Konfigurationssignale an die Auswerteeinheit 20 übermitteln. Der Konfigurationseingang 18B ist ferner mit einer Kodiervorrichtung 50 verbunden, über die ebenfalls Konfigurationssignale an die Auswerteeinheit 20 übermittelt werden können.

Die Auswerteeinheit 20 ist dazu eingerichtet, den Überbrückungszeitraum und/oder zumindest einen Teilzeitraum des Überbrückungszeitraums auf der Grundlage der von der Kodiervorrichtung 50 und/oder dem Steuersystem 30 empfangenen Konfigurationssignale zu bestimmen, was nachfolgend mit Bezug auf Fig. 2 noch näher erläutert wird.

In Fig. 2 sind verschiedene Signalverläufe über die Zeit t dargestellt. Bei den Signalen handelt es sich um Logiksignale, wobei ein Wert 0 dem Zustand FALSCH oder INAKTIV und ein Wert 1 dem Zustand WAHR oder AKTIV entspricht.

Im oberen Teil von Fig. 2 sind zwei komplementär zueinander verlaufende Überbrückungsanforderungen dargestellt, wobei eine erste Überbrückungsanforderung UA1 von dem Überbrückungseingang 16A und eine zweite Überbrückungsanforderung UA2 von dem Überbrückungseingang 16B empfangen werden können. Wie in Fig. 2 gut zu erkennen ist, verlaufen die Überbrückungsanforderungen UA1, UA2 synchron zueinander. Das Vorsehen zweier komplementärer Überbrückungsanforderungen dient der weiteren Erhöhung der Sicherheit.

Ferner ist der Signalverlauf eines Detektionssignals DS dargestellt, wie es von der Schutzeinrichtung 22 übermittelt und an dem Überwachungseingang 12 empfangen wird.

Schließlich wird der Zeitraum, für den die Sicherheitssteuerung 10 in einem Überbrückungsmodus betrieben wird, durch den Signalverlauf UM repräsentiert.

Eine Signalsequenz, wie sie in Fig. 2 dargestellt ist, beginnt damit, dass das Steuerungssystem 30 die Überbrückungsanforderungen UA1, UA2 aussendet, d.h. die Überbrückungsanforderungen UA1 bzw. UA2 wechseln von 0 nach 1 bzw. von 1 nach 0. Dadurch wird der Sicherheitssteuerung 10 signalisiert, dass ein zulässiges Objekt 44 zu erwarten ist und entsprechend der Überbrückungsmodus aktiviert werden soll.

Während eines ersten Latenzzeitraums L1 wird nun das Eintreffen eines Detektionssignals DS erwartet. Der erste Latenzzeitraum L1 korrespondiert mit einem bestimmten Förderweg, den das Objekt 44 zwischen dem Auslösen der Überbrückungsanforderungen UA1, UA2 und dem Unterbrechen des Schutzfeldes 24 mit einer bestimmten Fördergeschwindigkeit zurücklegt. Im Ausführungsbeispiel trifft das erwartete Detektionssignal DS zum Ende des ersten Latenzzeitraums L1 ein. Gleichzeitig wird in der Sicherheitssteuerung 10 der Überbrückungsmodus UM aktiviert. Der Überbrückungsmodus UM ist nun für einen vorgegebenen Detektionszeitraum D aktiv, wobei für den Detektionszeitraum D eine minimale und/oder maximale Zeitdauer vorgegeben sein kann. Der Detektionszeitraum D orientiert sich an der Fördergeschwindigkeit und der Länge des zu fördernden Objekts.

Wenn das Objekt 44 das Schutzfeld 24 wieder verlässt, fällt das Detektionssignal DS ab, d.h. es ändert seinen Zustand von 1 auf 0. Zugleich beginnt ein zweiter Latenzzeitraum L2 zu laufen, nach dessen Ablauf der Überbrückungsmodus UM deaktiviert wird, d.h. sich der Zustand von UM von 1 auf 0 ändert. Wenn aber vor Ablauf des zweiten Latenzzeitraums L2 das Schutzfeld 24 kurzzeitig freigegeben wird und daher das Detektionssignal von 0 auf 1 zurückwechselt, etwa aufgrund einer Lücke im Transportgut, wird der Überbrückungsmodus UM fortgesetzt. Wenn dann das Objekt 44 das Schutzfeld 24 wieder verlässt bzw. eine weitere Objektlücke detektiert wird, wird der zweite Latenzzeitraum L2 erneut getriggert.

Wenn die Überbrückungsanforderungen UA1, UA2 bereits vor dem Freiwerden des Schutzfeldes 24 beendet werden, kann zusätzlich überprüft werden, ob innerhalb einer dem zweiten Latenzzeitraum L2 entsprechenden Zeitdauer nach dem Ende der Überbrückungsanforderungen UA1, UA2 das Schutzfeld 24 frei wird. In dem Fall muss also das Schutzfeld 24 innerhalb eines Zeitraums, der dem zweiten Latenzzeitraum L2 entspricht, frei werden, damit kein Störungszustand festgestellt wird. Dies ist zum Beispiel im Falle eines ungewöhnlich langen Werkstückes denkbar.

Mit dem Freiwerden des Schutzfeldes 24, d.h. mit dem Wechsel des Detektionssignals von 1 auf 0, beginnt gleichzeitig ein dritter Latenzzeitraum L3 zu laufen. Innerhalb dieses dritten Latenzzeitraums L3 wird eine Beendigung der Überbrückungsanforderungen UA1, UA2 erwartet.

Sobald in diesem Ablauf der vorstehend beschriebenen Sequenzschritte Unregelmäßigkeiten auftreten, d.h. z.B. einer der genannten Zeiträume überschritten wird oder bestimmte Signalwechsel ausbleiben, kann die Systemsteuerung 10 das Vorliegen eines Störungszustands feststellen, eine entsprechende Fehlermeldung speichern und/oder ausgeben, beispielsweise an einem entsprechenden Signalausgang.

Ein Störungszustand kann insbesondere in den folgenden Fällen festgestellt werden:
- das Detektionssignal DS wird nicht oder nicht innerhalb des ersten Latenzzeitraums L1 empfangen;
- ein empfangenes Detektionssignal DS endet vor Ablauf eines Mindestzeitraums oder erst nach Ablauf eines Höchstzeitraums;
- die Überbrückungsanforderungen UA1, UA2 werden vor einer Beendigung des Detektionssignals DS beendet und das Detektionssignal DS endet erst nach Ablauf des zweiten Latenzzeitraums L2 nach der Beendigung der Überbrückungsanforderungen UA1, UA2;
- nach einer Beendigung des Detektionssignals DS erfolgt eine Beendigung der Überbrückungsanforderungen UA1, UA2 erst nach Ablauf des dritten Latenzzeitraums L3.

Wenn sich die Sicherheitssteuerung 10 in einem Störungszustand befindet, erfolgt die Ausgabe eines Abschaltbefehls erst dann, wenn das Schutzfeld 24 unterbrochen oder verletzt wird und dementsprechend ein Detektionssignal DS ausgegeben wird. Unabhängig von einer derartigen Unterbrechung kann das Vorliegen eines Störungszustands durch eine Bedienperson quittiert oder aufgehoben werden und damit die Sicherheitssteuerung 10 in ihren Ausgangszustand zurückversetzt werden. Für eine nachfolgende Analyse kann das Vorliegen eines Störungszustands als Fehlerereignis für eine beliebige Zeitdauer gespeichert werden.

Aus den vorstehenden Ausführungen wird ersichtlich, dass ein Bedarf besteht, die Latenzzeiträume L1 bis L3, die Minimal- und/oder Maximaldauer des Detektionszeitraums D an unterschiedliche Transportgeschwindigkeiten des Förderbands 42 und/oder unterschiedliche Längen der transportierten Objekte 44 anzupassen. Je nach Anforderung können ein oder mehrere dieser Zeiträume angepasst werden. Das Anpassen erfolgt durch Übertragen entsprechender Konfigurationssignale von der Kodiervorrichtung 50 und/oder des Steuersystems 30 an die Sicherheitssteuerung 10. Die Konfigurationssignale können zum Beispiel in Form von Logikzuständen, die innerhalb der Auswerteeinheit 20 mit Hilfe von Lookup-Tabellen oder dergleichen dekodiert werden können, oder durch ein Übermitteln entsprechender Zahlenwerte übermittelt werden.

Beispielsweise kann das Steuersystem 30 als Konfigurationssignal die Länge eines zu erwartenden Objekts übermitteln, woraus dann die Auswerteeinheit 20 unter Berücksichtigung der intern bekannten oder ebenfalls als Konfigurationssignal übermittelten Fördergeschwindigkeit des Förderbandes 42 entsprechende Zeiträume, d.h. die Latenzzeiträume L1 bis L3 und/oder den Detektionszeitraum D bestimmen kann.

Insbesondere für eine einmalige Einrichtungskonfiguration für einen Betrieb, bei dem sich die Fördergeschwindigkeit und/oder die Transportgutlänge nicht verändert, kann auch lediglich die Konfiguration mit Hilfe der Kodiervorrichtung 50 ausreichend sein. Die Kodierung kann beispielsweise mittels einer 1-aus-n-Kodierung erfolgen. Zu diesem Zweck kann die Kodiervorrichtung 50 beispielsweise einen oder mehrere Schalter aufweisen, wobei beispielsweise jedem zu konfigurierenden Zeitraum ein Schalter zugewiesen werden kann und je nach Schalterstellung das zugehörige Konfigurationssignal einen von zwei Werten aktivieren kann.

Es versteht sich, dass auch beliebige andere Kodierungsformen möglich sind. Ferner kann die Übermittlung von Konfigurationssignalen sowohl durch die Kodiervorrichtung 50 als auch das unabhängige Steuersystem 30 erfolgen.

### Bezuqszeichenliste

- 10: Sicherheitssteuerung
- 12: Überbrückungseingang
- 14: Steuerausgang
- 16A, 16B: Überbrückungseingang
- 18A, 18B: Konfigurationseingang
- 20: Auswerteeinheit
- 22: Schutzeinrichtung
- 24: Schutzfeld
- 30: Steuersystem
- 40: Maschine
- 42: Förderband
- 44: Objekt
- 50: Kodiervorrichtung
- D: Detektionszeitraum
- DS: Detektionssignal
- F: Förderrichtung
- L1, L2, L3: Latenzzeitraum
- UA1, UA2: Überbrückungsanforderung
- UM: Überbrückungsmodus

## Patentansprüche

1. Sicherheitssteuerung (10) zur sicherheitsgerichteten Überwachung und Steuerung einer Maschine (40), mit
zumindest einem Überwachungseingang (12), welcher dazu eingerichtet ist, ein Detektionssignal (DS) von einer Schutzeinrichtung (22) zu empfangen, zumindest einem Steuerausgang (14), welcher dazu eingerichtet ist, einen Abschaltbefehl an die zu überwachende und zu steuernde Maschine (40) auszugeben,
zumindest einem Überbrückungseingang (16A, 16B), welcher dazu eingerichtet ist, eine Überbrückungsanforderung von einem unabhängigen Steuersystem (30) zu empfangen, und
einer Auswerteeinheit (20), welche mit dem Überwachungseingang (12), dem Überbrückungseingang (16A, 16B) und dem Steuerausgang (14) verbunden ist, und welche dazu eingerichtet ist, auf der Grundlage eines empfangenen Detektionssignals den Abschaltbefehl zu erzeugen, wobei die Sicherheitssteuerung (10) nach dem Empfangen einer Überbrückungsanforderung für einen vorgebbaren, in einen oder mehrere Teilzeiträume unterteilten Überbrückungszeitraum in einem Überbrückungsmodus betrieben wird, wobei in dem Überbrückungsmodus zumindest während eines Teilzeitraums auch bei einem Empfang eines Detektionssignals kein Abschaltbefehl ausgegeben wird,
wobei zumindest ein mit der Auswerteeinheit (20) verbundener Konfigurationseingang (18A, 18B) vorgesehen ist, welcher dazu eingerichtet ist, ein jeweiliges Konfigurationssignal zu empfangen,
wobei die Auswerteeinheit (20) dazu eingerichtet ist, den Überbrückungszeitraum und/oder zumindest einen Teilzeitraum des Überbrückungszeitraums auf der Grundlage des empfangenen Konfigurationssignals zu bestimmen, und
wobei die Auswerteeinheit (20) dazu eingerichtet ist, einen Störungszustand festzustellen, wenn innerhalb des Überbrückungszeitraums und/oder innerhalb zumindest eines Teilzeitraums ein erwartetes Detektionssignal nicht empfangen wurde und/oder eine erwartete Beendigung eines Empfangs eines Detektionssignals oder einer Überbrückungsanforderung nicht erfolgt ist,
**dadurch gekennzeichnet,**
**dass** einer der Teilzeiträume ein vorgebbarer erster Latenzzeitraum (L1) ist, innerhalb dessen ein Detektionssignal empfangen werden muss, damit kein Störungszustand festgestellt wird, wobei die Auswerteeinheit (20) dazu eingerichtet ist, den ersten Latenzzeitraum (L1) auf der Grundlage des empfangenen Konfigurationssignals zu bestimmen, und/oder dass einer der Teilzeiträume ein vorgebbarer Detektionszeitraum (D) ist, für den ein zuvor empfangenes Detektionssignal andauern muss, damit kein Störungszustand festgestellt wird, wobei die Auswerteeinheit (20) dazu eingerichtet ist, den Detektionszeitraum (D) auf der Grundlage des empfangenen Konfigurationssignals zu bestimmen,
und **dass** einer der Teilzeiträume ein vorgebbarer dritter Latenzzeitraum (L3) ist, innerhalb dessen nach Beendigung des Betriebs der Sicherheitssteuerung (10) in dem Überbrückungsmodus der Empfang der Überbrückungsanforderung beendet sein muss, damit kein Störungszustand festgestellt wird, wobei die Auswerteeinheit (20) dazu eingerichtet ist, den dritten Latenzzeitraum (L3) auf der Grundlage des empfangenen Konfigurationssignals zu bestimmen.

2. Sicherheitssteuerung (10) nach Anspruch 1,
**dadurch gekennzeichnet,**
**dass** die Auswerteeinheit (20) dazu eingerichtet ist, einen festgestellten Störungszustand an einem Störungsausgang zu signalisieren.

3. Sicherheitssteuerung (10) nach Anspruch 1 oder 2,
**dadurch gekennzeichnet,**
**dass** nach Feststellen eines Störungszustands ein Abschaltbefehl erst dann ausgegeben wird, wenn ein Detektionssignal empfangen wurde.

4. Sicherheitssteuerung (10) nach einem der vorhergehenden Ansprüche,
**dadurch gekennzeichnet,**
**dass** die Auswerteeinheit (20) dazu eingerichtet ist, einen Mindestwert und/oder einen Höchstwert für die Dauer des Detektionszeitraums (D) auf der Grundlage des empfangenen Konfigurationssignals zu bestimmen.

5. Sicherheitssteuerung (10) nach einem der vorhergehenden Ansprüche,
**dadurch gekennzeichnet,**
**dass** einer der Teilzeiträume ein vorgebbarer zweiter Latenzzeitraum (L2) ist, wobei der Betrieb in dem Überbrückungsmodus beendet wird, wenn für die Dauer des zweiten Latenzzeitraums (L2) kein Detektionssignal empfangen wird, und/oder wenn nach Beendigung des Empfangs der Überbrückungsanforderung innerhalb des zweiten Latenzzeitraums (L2) auch der Empfang des Detektionssignals beendet wird, wobei die Auswerteeinheit (20) dazu eingerichtet ist, den zweiten Latenzzeitraum (L2) auf der Grundlage des empfangenen Konfigurationssignals zu bestimmen.

6. Sicherheitssteuerung (10) nach einem der vorhergehenden Ansprüche,
**dadurch gekennzeichnet,**
**dass** der Konfigurationseingang (18A, 18B) dazu eingerichtet ist, das Konfigurationssignal von dem unabhängigen Steuersystem (30) zu empfangen.

7. Sicherheitssteuerung (10) nach einem der vorhergehenden Ansprüche,
**dadurch gekennzeichnet,**
**dass** eine mit dem Konfigurationseingang (18A, 18B) verbundene Kodiervorrichtung (50) vorgesehen ist, welche dazu eingerichtet ist, das Konfigurationssignal zu erzeugen.

8. Sicherheitssteuerung (10) nach einem der vorhergehenden Ansprüche,
**dadurch gekennzeichnet,**
**dass** mehrere Konfigurationseingänge (18A, 18B) vorgesehen sind, wobei die Konfigurationssignale als 1-aus-n-Code übermittelt werden.

9. Sicherheitssystem mit einer Sicherheitssteuerung (10) nach einem der vorhergehenden Ansprüche und zumindest einer mit der Sicherheitssteuerung (10) verbundenen Schutzeinrichtung (22).

10. Sicherheitssystem nach Anspruch 9,
**dadurch gekennzeichnet,**
**dass** die Schutzeinrichtung (22) eine berührungslos wirkende Schutzeinrichtung (22) ist, insbesondere ein optoelektronischer Sensor oder ein Ultraschallsensor.

## Claims

1. A safety controller (10) for the safety-directed monitoring and control of a machine (40), said safety controller (10) comprising
at least one monitoring input (12) which is configured to receive a detection signal (DS) from a protective device (22);
at least one control output (14) which is configured to output a shutdown command to the machine (40) to be monitored and controlled;
at least one bypass input (16A, 16B) which is configured to receive a bypass demand from an independent control system (30); and
an evaluation unit (20) which is connected to the monitoring input (12), to the bypass input (16A, 16), and to the control output (14) and which is configured to generate the shutdown command on the basis of a received detection signal, wherein the safety controller (10) is operated in a bypass mode for a predefinable bypass time period divided into one or more part time periods after the reception of a bypass demand, with no shutdown command being output in the bypass mode at least during a part time period even on a reception of a detection signal;
wherein at least one configuration input (18A, 18B) is provided which is connected to the evaluation unit (20) and which is configured to receive a respective configuration signal;
wherein the evaluation unit (20) is configured to determine the bypass time period and/or at least a part time period of the bypass time period on the basis of the received configuration signal; and
wherein the evaluation unit (20) is configured to determine a failure state when an expected detection signal was not received within the bypass time period and/or within at least a part time period and/or an expected ending of a reception of a detection signal or of a bypass demand has not taken place,
**characterized in that**
one of the part time periods is a predefinable first latency time period (L1) within which a detection signal has to be received so that no failure state is determined, with the evaluation unit (20) being configured to determine the first latency time period (L1) on the basis of the received configuration signal; and/or **in that** one of the part time periods is a predefinable detection time period (D) for which a previously received detection signal has to last so that no failure state is determined, with the evaluation unit (20) being configured to determine the detection time period on the basis of the received configuration signal;
and **in that** one of the part time periods is a predefinable third latency time period (L3) within which the reception of the bypass demand has to have ended after the ending of the operation of the safety controller (10) in the bypass mode so that no failure state is determined, with the evaluation unit (20) being configured to determine the third latency time period (L3) on the basis of the received configuration signal.

2. A safety controller (10) in accordance with claim 1,
**characterized in that**
the evaluation unit (20) is configured to signal a determined failure state to a failure output.

3. A safety controller (10) in accordance with claim 1 or claim 2,
**characterized in that,**
after the determination of a failure state, a shutdown command is only output when a detection signal has been received.

4. A safety controller (10) in accordance with any one of the preceding claims,
**characterized in that**
the evaluation unit (20) is configured to determine a minimum value and/or a maximum value for the duration of the detection time period (D) on the basis of the received configuration signal.

5. A safety controller (10) in accordance with any one of the preceding claims,
**characterized in that**
one of the part time periods is a predefinable second latency time period (L2), with the operation being ended in the bypass mode if no detection signal is received for the duration of the second latency time period (L2) and/or if the reception of the detection signal is also ended after the ending of the reception of the bypass demand within the second latency time period (L2), with the evaluation unit (20) being configured to determine the second latency time period (L2) on the basis of the received configuration signal.

6. A safety controller (10) in accordance with any one of the preceding claims,
**characterized in that**
the configuration input (18A, 18B) is configured to receive the configuration signal from the independent control system (30).

7. A safety controller (10) in accordance with any one of the preceding claims,
**characterized in that**
an encoding apparatus (50) is provided which is connected to the configuration input (18A, 18B) and which is configured to generate the configuration signal.

8. A safety controller (10) in accordance with any one of the preceding claims,
**characterized in that**
a plurality of configuration inputs (18A, 18B) are provided, with the configuration signals being transmitted as a 1 of n code.

9. A safety system having a safety controller (10) in accordance with any one of the preceding claims and having at least one protective device (22) connected to the safety controller (10).

10. A safety system in accordance with claim 9,
**characterized in that**
the protective device (22) is a piece of electro-sensitive protective equipment (22), in particular an optoelectronic sensor or an ultrasound sensor.

## Revendications

1. Dispositif de commande de sécurité (10) pour la surveillance et la commande relative à la sécurité d'une machine (40), comprenant
au moins une entrée de surveillance (12), qui est conçue pour recevoir un signal de détection (DS) d'un moyen de protection (22),
au moins une sortie de commande (14), qui est conçue pour émettre un ordre d'arrêt à la machine (40) à surveiller et à commander,
au moins une entrée d'inhibition (16A, 16B), qui est conçue pour recevoir une demande d'inhibition d'un système de commande indépendant (30), et
une unité d'évaluation (20), qui est reliée à l'entrée de commande (12), à l'entrée d'inhibition (16A, 16B) et à la sortie de commande (14), et qui est conçue pour générer l'ordre d'arrêt sur la base d'un signal de détection reçu, dans lequel le dispositif de commande de sécurité (10) fonctionne dans un mode d'inhibition pendant une période d'inhibition prédéfinie divisée en une ou plusieurs périodes partielles après la réception d'une demande d'inhibition, dans lequel, en mode d'inhibition, au moins pendant une période partielle, aucun ordre d'arrêt n'est émis même en cas de réception d'un signal de détection,
dans lequel il est prévu au moins une entrée de configuration (18A, 18B) reliée à l'unité d'évaluation (20), qui est configurée pour recevoir un signal de configuration respectif,
dans lequel l'unité d'évaluation (20) est conçue pour déterminer la période d'inhibition et/ou au moins une période partielle de la période d'inhibition sur la base du signal de configuration reçu, et
dans lequel l'unité d'évaluation (20) est conçue pour déterminer un état de défaut si, pendant la période d'inhibition et/ou pendant au moins une période partielle, un signal de détection attendu n'a pas été reçu et/ou une fin attendue de la réception d'un signal de détection ou d'une demande d'inhibition n'a pas eu lieu,
**caractérisé en ce**
**qu'**une des périodes partielles est une première période de latence (L1) prédéfinissable, pendant laquelle un signal de détection doit être reçu pour qu'aucun état de défaut ne soit constaté, l'unité d'évaluation (20) étant conçue pour déterminer la première période de latence (L1) sur la base du signal de configuration reçu, et/ou qu'une des périodes partielles est une période de détection (D) prédéfinissable pendant laquelle un signal de détection précédemment reçu doit durer pour qu'aucun état de défaut ne soit constaté, l'unité d'évaluation (20) étant conçue pour déterminer la période de détection (D) sur la base du signal de configuration reçu,
et **qu'**une des périodes partielles est une troisième période de latence (L3) prédéfinissable, pendant laquelle, après la fin du fonctionnement du dispositif de commande de sécurité (10) en mode d'inhibition, la réception de la demande d'inhibition doit être terminée pour qu'aucun état de défaut ne soit constaté, l'unité d'évaluation (20) étant conçue pour déterminer la troisième période de latence (L3) sur la base du signal de configuration reçu.

2. Dispositif de commande de sécurité (10) selon la revendication 1,
**caractérisé en ce**
**que** l'unité d'évaluation (20) est conçue pour signaler un état de défaut détecté à une sortie de défaut.

3. Dispositif de commande de sécurité (10) selon la revendication 1 ou 2,
**caractérisé en ce**
**qu'**après avoir constaté un état de défaut, un ordre d'arrêt n'est émis que si un signal de détection a été reçu.

4. Dispositif de commande de sécurité (10) selon l'une des revendications précédentes,
**caractérisé en ce**
**que** l'unité d'évaluation (20) est conçue pour déterminer une valeur minimale et/ou une valeur maximale pour la durée de la période de détection (D) sur la base du signal de configuration reçu.

5. Dispositif de commande de sécurité (10) selon l'une des revendications précédentes,
**caractérisé en ce**
**qu'**une des périodes partielles est une deuxième période de latence (L2) prédéfinissable, le fonctionnement en mode d'inhibition étant terminé si aucun signal de détection n'est reçu pendant la durée de la deuxième période de latence (L2), et/ou si, après la fin de la réception de la demande d'inhibition pendant la deuxième période de latence (L2), la réception du signal de détection est également terminée, l'unité d'évaluation (20) étant conçue pour déterminer la deuxième période de latence (L2) sur la base du signal de configuration reçu.

6. Dispositif de commande de sécurité (10) selon l'une des revendications précédentes,
**caractérisé en ce**
**que** l'entrée de configuration (18A, 18B) est conçue pour recevoir le signal de configuration du système de commande indépendant (30).

7. Dispositif de commande de sécurité (10) selon l'une des revendications précédentes,
**caractérisé en ce**
**qu'**il est prévu un dispositif de codage (50) relié à l'entrée de configuration (18A, 18B), qui est conçu pour générer le signal de configuration.

8. Dispositif de commande de sécurité (10) selon l'une des revendications précédentes,
**caractérisé en ce**
**que** plusieurs entrées de configuration (18A, 18B) sont prévues, les signaux de configuration étant transmis sous forme de code 1 parmi n.

9. Système de sécurité comprenant un dispositif de commande de sécurité (10) selon l'une des revendications précédentes et au moins un moyen de protection (22) relié au dispositif de commande de sécurité (10).

10. Système de sécurité selon la revendication 9,
**caractérisé en ce**
**que** le moyen de protection (22) est un moyen de protection (22) fonctionnant sans contact, en particulier un capteur optoélectronique ou un capteur à ultrasons.
